# EUROPEAN PATENT APPLICATION

(11) **EP 4 029 909 A1**
(43) Date of publication of application: **20.07.2022**
(21) Application number: 20862174.8
(22) Date of filing: 19.06.2020
(51) Int. Cl.: C08L 1/00, C08L 7/00, C08L 101/16, C08J 5/18, C08K 3/013, C08K 3/26

(54) **BIODEGRADABLE RUBBER COMPOSITION, METHOD FOR PRODUCING BIODEGRADABLE RUBBER COMPOSITION, AND BIODEGRADABLE MOLDED RUBBER ARTICLE**

(30) Priority: 13.09.2019 JP 2019167603
(71) Applicant: TBM Co., Ltd., Tokyo 100-0006 (JP)
(72) Inventor: SASAKAWA, Gouki, Tokyo 104-0061 (JP); HAYASHI, Hiroyuki, Tokyo 104-0061 (JP)
(74) Representative: Papula Oy
(86) International application number: PCT/JP2020/024092
(87) International publication number: WO 2021/049122

(57) **Abstract**

Provided are a polymer material that contributes to environmental protection, has biodegradability, has excellent well-balanced mechanical properties, self-adhesion, and the like, is flexible, and has a reduced variation in the properties. The present invention provides a biodegradable rubber composition comprising natural rubber and an inorganic substance powder in a mass ratio of 45:55 to 10:90, and modified cellulose in an amount of 0.5 part by mass to 10.0 parts by mass relative to 100 parts by mass of the natural rubber.

## Description

### Field

The present invention relates to a biodegradable rubber composition, a method for producing the biodegradable rubber composition, and a biodegradable rubber molded product using the biodegradable rubber composition. More specifically described, the present invention relates to a biodegradable rubber composition having biodegradability, having excellent well-balanced mechanical properties, self-adhesion, and the like, and having flexibility and reduced property variation, a method for producing the biodegradable rubber composition, and a biodegradable rubber molded product using the biodegradable rubber composition.

### Background

Conventionally, a composition made by highly filling an inorganic substance powder in a polymer with an inorganic substance powder has been widely used as a material for various industrial and household molded products, molded packaging product for food packaging and general products, and the like. A molded product molded from a polymer composition blended with an inorganic substance powder has excellent water resistance as compared with a paper product and, in addition, may have excellent printing properties as compared with a common resin product. For example, the molded product is useful as a material for a packaging sheet, a printed menu table, and the like, to which water, dirt, and the like are likely to be attached.

The packaging sheet is required to have excellent mechanical properties such as strength, flexibility, and elastic modulus in a well-balanced manner. A sheet having self-adhesion can improve the efficiency of packaging work such as eliminating the need for a pressure sensitive adhesive tape. Now that environmental protection has become an international issue, utilization of green and sustainable biomass materials is also desired. Biodegradability is also important for, in particular, polymer molded products such as the packaging sheets.

Natural rubber is a representative example of the biomass material and has been used for a long period of time. On the other hand, inorganic substance powders such as calcium carbonate are abundant resources in the natural world (Non-Patent Literature 1) and can preferably meet the demand for environmental protection. Conventionally, polymer compositions using the natural rubber and the inorganic substance powder as raw materials have been developed.

For example, Patent Literature 1 discloses a rubber composition in which 100 parts by mass of a diene-based rubber such as natural rubber is blended with 10 parts by mass to 120 parts by mass of calcium carbonate together with 1 part by mass or more of a cellulose-based compound and carbon black. This rubber composition has excellent adhesion to reinforcing materials such as fibers and is used for applications such as conveyor belts. Patent Literature 2 discloses a rubber composition for tires in which 0.1 part by mass to 30 parts by mass of modified cellulose powder and 0.1 part by mass to 10 parts by mass of alkaline earth metal salt such as calcium carbonate are blended relative to 100 parts by mass of a diene-based rubber such as natural rubber. As another composition including natural rubber as a base material, Patent Literature 3 discloses a method for producing a vulcanized product using sulfur-curable rubber such as natural rubber and 0.5% by weight to 12% by weight of a curing agent relative to the rubber. In this invention, the curing agent obtained by stirring and heating water, sulfur, and olefin in the presence of a basic catalyst such as calcium carbonate and a dispersant such as carboxymethyl cellulose is used.

Mixing of an inorganic substance powder with a natural rubber latex has also been a conventional technique and a natural rubber latex including calcium carbonate as described below is also commercially available. Patent Literature 4 discloses an insect-proof latex composition in which about 1% to about 70% of a filler such as calcium carbonate and about 0% to 10% of a thickener such as cellulose are blended in a rubber latex together with an insect repellent.

It has been reported that natural rubber can also be microbially decomposed by white rotting fungi and the like (Non-Patent Literature 2). As a biodegradable material using natural rubber, for example, Patent Literature 5 discloses a biodegradable pressure sensitive adhesive tape formed by applying a biodegradable pressure sensitive adhesive using natural rubber or the like as a base material to the surface of the biodegradable pressure sensitive adhesive tape made of 100 parts by weight of a biodegradable aliphatic polyester resin and 10 parts to 150 parts by weight of a filler such as surface-treated calcium carbonate.

### Citation List

### Patent Literature

Patent Literature 1: Japanese Patent Application Laid-open No. 2017-8207
Patent Literature 2: Japanese Patent Application Laid-open No. 2013-166815
Patent Literature 3: Japanese Patent Application Laid-open No. H7-309977
Patent Literature 4: Japanese Patent Application Laid-open No. S59-27801
Patent Literature 5: Japanese Patent Application Laid-open No. H10-237401

### Non-Patent Literature

Non-Patent Literature 1: Sugita. Journal of the Society of Rubber Science and Technology, Japan, Vol. 87, p. 496 (2014)
Non-Patent Literature 2: Nakajima, Enoki. Journal of the Society of Rubber Science and Technology, Japan, Vol. 87, p. 243 (2014)

### Summary

### Technical Problem

Both Patent Literatures 1 and 2 relate to rubber compositions used for belts, tires, and the like. Although having described adhesion for reinforcing fibers, durability, and the like, these Patent Literatures have not referred to biodegradability and environmental protection. All of the compositions disclosed in Examples of these prior art literatures use only a blend of natural rubber and synthetic rubber or a synthetic polymer as a base material and the amount of biomass is small. Patent Literature 3 relates to an invention focusing on a curing agent. Although calcium carbonate is used in the disclosed composition, the blending amount of calcium carbonate is even less than 1%. The insect repellent latex composition described in Patent Literature 4 is filled with a large amount of calcium carbonate and the like. The compositions disclosed in Examples, however, are blended rubber compositions of natural rubber and SBR, which is difficult to say that biomass materials are utilized. None of Patent Literatures 1 to 4 have not described biodegradability or environmental protection. Non-Patent Literature 1 described above also describes a rubber material in which 100 parts by mass of various calcium carbonates are mixed with 100 parts by mass of natural rubber. Although disclosed study results relate to crosslinkability and reinforcing property, Non-Patent Literature 1 does not describe anything with respect to biodegradability.

On the other hand, the biodegradable polyester described in Patent Literature 5 is concerned with cost and supply stability. The synthetic rubber blend compositions disclosed in Patent Literatures 1, 2, 4, and the like fail to contribute to environmental protection and are insufficient in mechanical properties and self-adhesion. Therefore, the utilization of the biomass materials that have no worries about supply has been required. Natural rubber is a representative biomass material, which is soft, exhibits high mechanical strength, has self-adhesion, and can be decomposed by some microorganisms. The biodegradability of natural rubber, however, is not necessarily high. According to the studies conducted by the inventors of the present invention, sufficient biodegradability cannot be obtained simply by blending the inorganic substance powder having an almost equal amount to the amount of natural rubber with the natural rubber. Although biodegradability is not studied in Patent Literature 3 or Non-Patent Literature 1, it is conceivable that high biodegradability has not been exhibited even if the biodegradability is tested, as estimated from the described formulations. Although Patent Literature 5 mentions biodegradability, only the pressure sensitive adhesion force is measured and the biodegradability is not evaluated in Examples.

In addition, while exhibiting excellent physical properties such as high mechanical strength, natural rubber also has a unique odor and the problem of odor transfer arises when used as a packing material and the like. In some cases, the self-adhesion of natural rubber may be excessively strong in tackiness and may hinder the packing work. From this viewpoint, it is conceivable that blend of a large amount of inorganic substance powder into natural rubber is important. The blend of a large amount of inorganic substance powder, however, may cause the self-adhesion to be extremely lowered and the mechanical properties to vary.

The present invention has been made in view of the above actual situations. An object of the present invention is to provide a polymer material that utilizes sustainable raw materials as well as contributes to environmental protection, has biodegradability, has excellent well-balanced mechanical properties, self-adhesion, and the like, is flexible, and has a reduced variation in the properties.

### Solution to Problem

As a result of intensive study for solving the above-described problems, the inventors of the present invention have found that a composition having biodegradability, having excellent well-balanced mechanical properties, self-adhesion, and the like, being flexible, and having less variation in properties can be obtained by blending a specific amount of an inorganic substance powder in natural rubber and adding a specific amount of modified cellulose.

Namely, the present invention provides a biodegradable rubber composition comprising natural rubber and an inorganic substance powder in a mass ratio of 45:55 to 10:90, and modified cellulose in an amount of 0.5 part by mass to 10.0 parts by mass relative to 100 parts by mass of the natural rubber.

As one aspect of the biodegradable rubber composition according to the present invention, a biodegradable rubber composition is represented in which the modified cellulose is carboxymethyl cellulose.

As one aspect of the biodegradable rubber composition according to the present invention, a biodegradable rubber composition is represented in which the inorganic substance powder comprises calcium carbonate.

As one aspect of the biodegradable rubber composition according to the present invention, a biodegradable rubber composition is represented in which the calcium carbonate is heavy calcium carbonate.

As one aspect of the biodegradable rubber composition according to the present invention, a biodegradable resin molded product is represented in which an average particle diameter of the inorganic substance powder in accordance with an air permeation method is 0.5 µm or more and 13.5 µm or less.

The present invention solving the above-descried problem is also archived by a method for producing a biodegradable rubber composition, the method comprising: mixing an inorganic substance-containing natural rubber latex comprising natural rubber and an inorganic substance powder in a mass ratio of 45:55 to 10:90 in a dried mass, and 0.5 parts by mass to 10.0 parts by mass of modified cellulose or an aqueous solution of the modified cellulose relative to 100 parts by mass of the natural rubber in the inorganic substance-containing natural rubber latex; and drying, in which the mixing and the drying are continuously performed.

The present invention solving the above-descried problem is also archived by a biodegradable rubber molded product made of the biodegradable rubber composition.

As one aspect of the biodegradable rubber molded product according to the present invention, the biodegradable rubber molded product as a packaging sheet is represented.

As one aspect of the biodegradable rubber molded product according to the present invention, the biodegradable rubber molded product in which the packaging sheet is a foamed sheet is represented.

### Advantageous Effects of Invention

According to the present invention, the rubber composition that has biodegradability, has excellent well-balanced mechanical properties, self-adhesion, and the like, and has a reduced variation in the properties and, at the same time, utilizes sustainable raw materials and contributes to environmental protection and the molded product of the rubber composition can be provided with superior economical advantage. The molded product obtained from the composition according to the present invention also reduces odor and, in addition, has flexibility and adequate self-adhesion. Therefore, the molded product is particularly suitable for use such as the packaging sheet and the like.

### Description of Embodiments

Hereinafter, the present invention will be described in detail with reference to embodiments. The present invention, however, is not particularly limited thereto.

### <Biodegradable rubber composition according to present invention>

The biodegradable rubber composition according to the present invention includes natural rubber and an inorganic substance powder in a mass ratio of 45:55 to 10:90, and modified cellulose in an amount of 0.5 part by mass to 10.0 parts by mass relative to 100 parts by mass of the natural rubber.

As described above, the biodegradability of the composition made of the natural rubber and the inorganic substance powder is not necessarily high. In addition, biodegradability has been difficult to be satisfied with mechanical properties and self-adhesion at the same time. As a result of intensive study conducted by the inventors of the present invention, it has been found that the biodegradability is improved by determining the mass ratio of the natural rubber and the inorganic substance powder to be 45:55 to 10:90. In addition it has been found that the blend of 0.5 part by mass to 10.0 parts by mass of the modified cellulose relative to 100 parts by mass of the natural rubber allows the biodegradability to be further enhanced, the balance between biodegradability, and mechanical properties and self-adhesion to be improved, and variation of the properties also to be reduced. Although the present invention is not limited by a specific theory, it is conceivable that a large number of fine voids are formed at the interface between the natural rubber constituting the matrix and the inorganic substance powder in the rubber composition including the above-described amount of the inorganic substance powder and the molded product of the rubber composition and thus the surface area of the natural rubber is remarkably large. As a result, it is conceivable that the field of decomposition of the molded product by the action of microorganisms is dramatically improved and thus the biodegradability is improved. Of the inorganic substance powders, calcium carbonate, in particular, heavy calcium carbonate is presumed to work particularly effectively in improving biodegradability because heavy calcium carbonate has a shape such as an amorphous shape originated from its production history and has a high specific surface area. Furthermore, it is conceivable that the blend of the modified cellulose allows the inorganic substance powder to be uniformly and finely dispersed in the natural rubber matrix, the biodegradability to be further improved because the surface area of the matrix is further increased, the variation in properties to be reduced, and thus the balance between the biodegradability, and strength and the self-adhesion also to be improved.

First, each component constituting the biodegradable rubber composition will be described in detail.

### <Natural rubber>

Natural rubber is a representative biomass material and various types of natural rubber are commercially available. The basic structure of general-purpose natural rubber is cis-1,4-polyisoprene. Natural rubber, however, may also contain a small amount of trans-bonds and fatty acids. Natural rubber is a natural product and thus its quality may vary depending on the area of production or the like. Any natural rubber, however, can be used in the present invention. Other polymer raw materials including biodegradable plastics such as polylactic acid or a small amount of synthetic polyisoprene can also be blended. Examples of plants producing rubber include various varieties such as *Hevea brasiliensis, Funtumia elastica, Palaquium gutta (Hook.f.) Baill,* and *Manilkara bidentata.* Any rubber raw materials can be used in the present invention and general-purpose rubber derived from *Hevea brasiliensis* is preferably used. The rubber derived from *Hevea brasiliensis* is the most versatile natural rubber and is excellent in terms of supply stability and cost. In addition, the collected rubber has excellent mechanical properties.

Natural rubber is commercially available as a smoked sheet made by solidifying sap or the like in many cases, but a natural rubber latex may be used as a raw material. Use of natural rubber in which a part of the molecular chain is modified, deproteinized natural rubber for allergy countermeasures, a masterbatch in which a vulcanizing agents and the like are blended, or the like may also be used. The natural rubber latex is preferably used. Use of the latex allows a mixing operation with other raw materials to be performed in an aqueous system, which can contribute to environmental conservation. As the natural rubber latex, any of various known raw materials may be used. A depolymerized natural rubber latex, an epoxidized natural rubber latex, a modified natural rubber latex grafted with acrylate and the like may also be used. These materials may be used after blending. A pre-vulcanized natural rubber latex is particularly preferably used. Examples of the pre-vulcanized latex include, but are not limited to, a fully pre-vulcanized latex or a partially pre-vulcanized latex that is vulcanized by sulfur, a peroxide, a vulcanization accelerator such as thiuram, and radiation. The use of the pre-vulcanized latex can simplify the process of producing the biodegradable rubber composition according to the present invention.

### <Inorganic substance powder>

The inorganic substance powder blended in the biodegradable rubber composition according to the present invention is not particularly limited and various known inorganic substance powders may be used. Examples of the inorganic substance powders include powders of carbonates, sulfates, silicates, phosphates, borates, and oxides of calcium, magnesium, aluminum, titanium, zinc, and the like or hydrates thereof. Specific examples include calcium carbonate, magnesium carbonate, zinc oxide, titanium oxide, silica, alumina, kaolin clay, talc, mica, wollastonite, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, zeolite, diatomaceous earth, sericite, shirasu, calcium sulfite, potassium titanate, bentonite, graphite, and ferrite. These inorganic substance powders may be used singly or in combination of two or more of them and may be synthetic or derived from natural minerals.

In the present invention, however, calcium carbonate serving as the inorganic substance powder is preferably used. Calcium carbonate is a resource that is abundant in nature and there is no concern about its supply, and, in addition, its use leads to environmental conservation. Calcium carbonate may be either what is called light calcium carbonate prepared by a synthetic method or what is called heavy calcium carbonate obtained by mechanically pulverizing and classifying a natural raw material including CaCO₃ as a main component such as limestone. These calcium carbonates may be used in combination. From the economical viewpoint, however, a large amount of heavy calcium carbonate is preferably used.

Here, heavy calcium carbonate refers to a product produced by pulverizing and classifying natural calcium carbonate such as calcite (for example, limestone, chalk, and marble), shell, and coral. Limestone serving as the raw material of heavy calcium carbonate is produced in abundance in Japan with a high degree of purity and can be obtained at very low price.

Either a wet method or a dry method may be selected as the method for pulverizing heavy calcium carbonate in accordance with standard methods. The dry pulverizing without the steps such as the dehydration step and the drying step, which increase the cost, is advantageous. A pulverizer is also not particularly limited. An impact pulverizer, a pulverizer using a pulverizing medium such as a ball mill, a roller mill, and the like can be used. The classification may be classification performed by air classification, wet cyclone, decanter, and the like. Surface treatment may be performed in any steps of before pulverizing, during pulverizing, before classification, and after classification and is preferably preformed before classification. The surface treatment before classification allows the narrower particle size distribution to be obtained in excellent efficiency. A part of a surface treatment agent may be added as a grinding aid before pulverizing or during pulverizing and the remaining part may be added in a later step to perform the surface treatment.

In order to enhance dispersibility of the inorganic substance powder such as heavy calcium carbonate, the surface of the particles may be previously subjected to surface modification in accordance with usual methods. Examples of the surface modification method include physical methods such as plasma treatment and a method in which the surface is subjected to chemical surface treatment with a coupling agent or a surfactant. Examples of the coupling agent include silane coupling agents and titanium coupling agents. The surfactant may be any of anionic, cationic, nonionic and amphoteric surfactants and examples thereof include higher fatty acids, higher fatty acid esters, higher fatty acid amides, and higher fatty acid salts.

As the inorganic substance powder such as calcium carbonate, the average particle diameter of the inorganic substance powder is preferably 0.5 µm or more and 13.5 µm or less and more preferably 1.0 µm or more and 10.0 µm or less. The average particle diameter of the inorganic substance powder described in the present specification means a value calculated from the measurement result of the specific surface area by the air permeation method in accordance with JIS M-8511. As a measuring instrument, for example, the specific surface area measuring apparatus Type SS-100 manufactured by Shimadzu Corporation can be preferably used. In particular, in the particle diameter distribution of the inorganic substance powder, particles having a particle diameter of 50.0 µm or more are preferably excluded. On the other hand, excessively fine particles cause the viscosity at the time of kneading with natural rubber to significantly increase and thus production of the molded products may be difficult. Therefore, the average particle diameter is preferably set to 0.5 µm or more.

Different from light calcium carbonate and the like produced by the synthetic method, for example, heavy calcium carbonate is provided with indefinite forms of the surface and the large specific surface area due to the particle formation by the pulverizing process and these properties provides particularly advantageous effects. As described above, there is a state where a large number of fine voids around which the natural rubber constituting the matrix does not adhere to the surface of the heavy calcium carbonate particles are formed or a state where a large number of parts in which adhesion is significantly weak exist immediately after molding the molded product at the interface between the natural rubber constituting the matrix and heavy calcium carbonate even without applying treatment such as stretching in particular at the time of molding because the heavy calcium carbonate particles blended in the biodegradable rubber composition have such indefinite forms of the surface and a large specific surface area.

From this reason, the specific surface area of the inorganic substance powder such as heavy calcium carbonate in accordance with a BET adsorption method is desirably 0.1 m²/g or more and 10.0 m²/g or less, more preferably 0.2 m²/g or more and 5.0 m²/g or less, and further preferably 1.0 m²/g or more and 3.0 m²/g or less. The BET adsorption method described here is in accordance with a nitrogen gas adsorption method. The inorganic substance powder having the specific surface area within this range allows the biodegradability to be excellently promoted in the obtained molded product because the natural rubber has many surfaces serving as the starting points of the biodegradation reaction from the reasons described above and, at the same time, deterioration in processability of the rubber composition due to the blend of the inorganic substance powder does not occur very often.

The indefinite forms of the inorganic substance powder can be represented by the low degree of spheroidization of the particle shape. Specifically, the roundness is desirably 0.50 or more and 0.95 or less, more preferably 0.55 or more and 0.93 or less, and further preferably 0.60 or more and 0.90 or less. The inorganic substance powder used in the present invention having the roundness within this range is likely to cause a state where many non-adherent fine voids are formed or a state where many parts where adhesion is very weak exist at the interface between the natural rubber constituting the matrix and the inorganic substance powder. Therefore, the inorganic substance powder is suitable for enhancing biodegradability and, at the same time, provide moderate strength as the product and molding processability.

Here, the roundness can be represented by (Projected area of particle)/(Area of a circle having the same perimeter as the projected perimeter of particle). The method for measuring the roundness is not particularly limited. For example, the projected area of the particle and the projected perimeter of the particle are measured from a micrograph and determined to be (A) and (PM), respectively. When the radius of a circle having the same perimeter as the projected perimeter of the particle is determined to be (r) and the area of the circle having the same perimeter as the projected perimeter of the particle is determined to be (B),
the roundness is determined as Roundness = A/B = A/πr² = A × 4π/(PM)².

These measurements can be performed with generally commercially available image analysis software using the projection image of each particle obtained by a scanning microscope, a stereomicroscope, or the like, whereby the roundness can be determined.

In the case where the biodegradable rubber composition according to the present invention includes heavy calcium carbonate, the particle surface of heavy calcium carbonate may be partially oxidized and the heavy calcium carbonate may partially include the composition of calcium oxide in the state of the molded product. The effect of promoting the biodegradability is observed if a relatively small part of the particle surface, for example, in a proportion sufficiently smaller than 2% of the volume of the particles is oxidized. Generation of calcium oxide on the particle surface can be determined and quantified by, for example, an EDTA titration method or a potassium permanganate titration method defined in JIS R 9011:2006.

### <Proportion of natural rubber to inorganic substance powder>

The blend proportion (% by mass) of the natural rubber and the inorganic substance powder included in the above-described biodegradable rubber composition according to the present invention is not particularly limited as long as the blend proportion is in a range of 45:55 to 10:90 in a dried mass and the proportion is not particularly limited as long as the proportion is within this range. With respect to the blend proportion of the natural rubber and the inorganic substance powder, the biodegradable rubber composition having a proportion of the inorganic substance powder of less than 55% by mass results in difficulty in achievement of sufficient biodegradability, whereas the biodegradable rubber composition having a proportion of the inorganic substance powder of more than 90% by mass may result in difficulty in molding processing. The blend proportion (% by mass) of the inorganic substance powder in both components is preferably 60% by mass to 85% by mass and further preferably 60% by mass to 80% by mass.

### <Modified cellulose>

The modified cellulose blended in the biodegradable rubber composition according to the present invention is not particularly limited and various known modified celluloses can be used. Examples of the modified cellulose include, but are not limited to, carboxymethyl cellulose, hydroxyethyl cellulose, and hydroxypropyl cellulose. Carboxymethyl cellulose or the salt thereof, in particular a sodium salt, is preferably used. In the present invention, "carboxymethyl cellulose" includes all of carboxymethyl cellulose, salts of carboxymethyl cellulose, modified products by esterification or the like of carboxymethyl cellulose, and mixtures thereof.

Carboxymethyl cellulose is ether of cellulose and glycolic acid (salt) and the proportion is not particularly limited. In the present invention, any proportion of cellulose/glycolic acid and any salt can be used. The molecular weight and the degree of polymerization of carboxymethyl cellulose are not particularly limited and, for example, carboxymethyl cellulose having a degree of polymerization of 50 or more, in particular 100 or more and 250 or less, and in particular 200 or less can be used. In the present invention, use of carboxymethyl cellulose having a viscosity of about 500 mPa·s to 1,600 mPa·s at a 4% aqueous solution measured at 25°C using a Brookfield viscometer allows the rubber composition in which the inorganic substance powder is further uniformly dispersed to be obtained.

### <Other additives>

As described above, the biodegradable rubber composition according to the present invention includes the natural rubber, the inorganic substance powder, and the modified cellulose, and other additives may also be added. In the biodegradable rubber molded product according to the present invention, the natural rubber component is preferably vulcanized (crosslinked). Therefore, the pre-vulcanized latex is preferably used. In the case where an unvulcanized natural rubber raw material is used, however, compounding agents for crosslinking, for example, a vulcanizing agent such as sulfur or peroxide, a vulcanization accelerator such as thiuram or mercaptobenzothiazole, a vulcanization accelerator aid such as zinc oxide, and a long-chain fatty acid such as stearic acid are preferably blended. In addition, various phenol-based and amine-based anti-aging agents/antioxidants, dispersants such as formalin condensates of sodium naphthalenesulfonate, anionic or nonionic surfactants, wetting agents such as sulfonated castor oil, thickeners such as acrylic acid salts and casein, stabilizers, pH adjusters, processing aids, coupling agents, fluidity improvers, ultraviolet ray absorbers, flame retardants, antistatic agents, colorants, foaming agents, and the like may be included. Strength and rigidity (modulus) may also be increased by blending fibers such as wood fibers. In general, a highly rigid sheet has stiffness and is excellent in printability. Therefore, such blending is effective when a molded product based on the biodegradable rubber composition according to the present invention is used as a printing sheet. The stiffness may also be increased by adjusting the crosslink density. As latex stabilizers, potassium hydroxide, ammonia, triethanolamine, anionic activators, sodium pentachlorophenolate, casein, and the like have been known. The modified cellulose, which is the component of the biodegradable rubber composition according to the present invention, may also act as the stabilizer and the thickener. These additives may be used singly or in combination of two or more of them. These additives may be mixed in the kneading/mixing step described below or may be previously mixed in the raw material before the mixing step. The blending amounts of these components may be appropriately set depending on the effect to be obtained and the like. A masterbatch in which these additives are previously blended may be used.

### <Method for producing biodegradable rubber composition>

The method for producing the biodegradable rubber composition according to the present invention is not particularly limited and various known methods can be used. For example, the natural rubber raw material, the inorganic substance powder, the modified cellulose, and other additives, if necessary, may be kneaded with rubber kneading rolls, a kneader, a Banbury mixer, an extruder, or the like to produce the biodegradable rubber composition, and the obtained biodegradable rubber composition may be vulcanized thereafter by a heating press or steam heating. In the present invention, however, the biodegradable rubber composition is preferably produced by mixing the inorganic substance-containing natural rubber latex including the natural rubber and the inorganic substance powder in a mass ratio of 45:55 to 10:90 in dried mass, and 0.5 part by mass to 10.0 parts by mass of the modified cellulose or the aqueous solution of the modified cellulose relative to 100 parts by mass of the natural rubber in the inorganic substance-containing natural rubber latex, and drying, in which the mixing and the drying are continuously performed. According to this method, the inorganic substance powder can be more uniformly dispersed in the natural rubber matrix. In addition, this method for production is performed in an aqueous system without scattering the inorganic substance powder and thus may contribute to environmental conservation. Here, the dried mass ratio of the natural rubber latex to the inorganic substance means the mass ratio of the natural rubber solid content to the dried product of the inorganic substance in the entire biodegradable rubber composition according to the present invention.

### <Biodegradable rubber molded product>

The biodegradable rubber molded product according to the present invention is a molded product made of the above-described biodegradable rubber composition molded by any molding methods. The molding method is not particularly limited and a common heating press method, an extrusion molding method, an injection molding method, a calendar molding method, or the like can be used. In the case where the natural rubber latex is used as described above, the dispersion liquid obtained by mixing is agglomerated or dried on a mold and molded. Depending on a target product, the dispersion liquid may be applied onto or impregnated into paper or fibers. The shape of the molded product is not particularly limited and various forms may be employed. The molded product according to the present invention may be, for example, a sheet, a film, or a bag-like product. In the case where sheet molding is performed, the obtained sheet may be subjected to stretching treatment. A foamed sheet can also be obtained by stretching or foam molding. Although various known foaming agents may be used in the foam molding, foaming with a surfactant in the raw material latex or microfoaming with sodium hydrogen carbonate or the like are preferably performed.

The rubber composition according to the present invention has excellent biodegradability and thus can be molded as various molded products such as consumable goods in the fields of daily necessities, automobile parts, electrical/electronic parts, building members, and the like. In particular, a composition obtained in the form of a dispersion liquid using the natural rubber latex as a raw material can also be used for paper coating and as a binder for fibers and pigments. Medical products such as gloves can be produced using deproteinized natural rubber latex or the like. The biodegradable rubber molded product according to the present invention also has excellent mechanical strength and self-adhesion/self-pressure sensitive adhesion and thus is useful, for example, as a packaging sheet. Among the molded products, foamed sheets, particularly slightly foamed sheets, are flexible and lightweight and have cushioning properties, and thus are suitable as the packaging sheets. Use of the packaging sheet according to the present invention allows packing to be performed without subjecting to a sticking step using an adhesive or a pressure sensitive adhesive tape due to taking advantage of its self-adhesion and can contribute to the reduction of packing work. In addition, use of the packaging sheet according to the present invention also contributes to environmental protection because the packaging sheet has excellent biodegradability and uses the sustainable raw materials as base materials. In addition to such a packaging sheet, the biodegradable rubber molded product according to the present invention can be used in the fields of, for example, printing paper, insulating paper, bags, labels, and tapes without particular limitation.

The biodegradable rubber composition according to the present invention also has excellent printability. Therefore, beautiful printing can be performed on the molded product and, also from this point, use as the packaging sheet as described above is suitable. The molded product according to the present invention may be provided with a coat layer for further improving printability and self-adhesion. For example, the coat layer is provided on one side or both sides of the sheet to serve as an inkjet receiving layer. The raw materials used for the coat layer are not particularly limited and, for example, acrylic, epoxy-based, and polyester-based coating materials and synthetic resin emulsions can be used. However, from the viewpoint of environmental protection, a paint produced by using the natural rubber latex as a base material and mixing pigments such as kaolin clay and calcium carbonate is preferably used. The present invention also includes the packaging sheet having such a coat layer as described above.

### Examples

Hereinafter, the present invention will be described in more detail with reference to Examples. The present invention, however, is not limited to these Examples.

### [Examples 1 to 6 and Comparative Examples 1 and 2]

Each rubber composition was prepared using the following raw materials.

### • Natural rubber latex

NR-1: Natural rubber latex including 23% by mass of natural rubber and 73% by mass of heavy calcium carbonate (Softon 1000, manufactured by Bihoku Funka Kogyo Co., Ltd.) having an average particle diameter of 2.2 µm (in accordance with the air permeation method) as solid content.
NR-2: Natural rubber latex including 48% by mass of natural rubber and 48% by mass of heavy calcium carbonate (Softon 1000, manufactured by Bihoku Funka Kogyo Co., Ltd.) having an average particle diameter of 2.2 µm (in accordance with the air permeation method) as solid content.
NR-3: Natural rubber latex including 23% by mass of natural rubber, 69% by mass of heavy calcium carbonate (Softon 1000, manufactured by Bihoku Funka Kogyo Co., Ltd.) having an average particle diameter of 2.2 µm (in accordance with the air permeation method), and 4% by mass of wollastonite as solid content.

### • Modified cellulose (CMC)

CMC-1: Sodium salt of carboxymethyl cellulose, viscosity of 4% aqueous solution (25°C, Brookfield viscometer): 500 mPa·s to 1,600 mPa·s (Finnfix 150, manufactured by CP Kelco Inc.)
CMC-2: Sodium salt of carboxymethyl cellulose, viscosity of 2% aqueous solution (25°C, Brookfield viscometer): 150 mPa·s to 400 mPa·s (Finnfix 300, manufactured by CP Kelco Inc.)
CMC-3: Sodium salt of carboxymethyl cellulose, viscosity of 2% aqueous solution (25°C, Brookfield viscometer): 400 mPa·s to 1,000 mPa·s (Finnfix 700, manufactured by CP Kelco Inc.)

The modified cellulose (CMC) was dissolved in water to prepare an aqueous solution of carboxymethyl cellulose having a concentration of 5% by mass. The predetermined amounts of the natural rubber latex and the aqueous solution of carboxymethyl cellulose were mixed and then the resultant mixture was poured into a bucket. This mixture was defoamed under reduced pressure, heated at 70°C for 1 hour, and dried and additionally vulcanized to obtain a sheet. The calculated results of compositions of each sheet from the amount of each component in the raw materials and the amount of each raw material used at the time of mixing are listed in Table 1.

The following tests were performed on each of the obtained sheets. The results are also listed in Table 1.

### • Biodegradability test

The biodegradability test was performed in accordance with the method described in Non-Patent Literature 2. White rotting fungi were inoculated into a mineral salts medium (MSM) (yeast extract concentration: 0.2 g/L, glucose concentration: 4 g/L) to which yeast extract and glucose were added and the resultant product was cultured at room temperature for 4 days to prepare a preculture solution.

At the bottom surface of a heat-sterilized 300 ml Erlenmeyer flask, 50 mg of the sheet prepared above was placed together with 20 ml of MSM, and 2 ml of the preculture solution was added thereto. The resultant mixture was allowed to stand and to be cultured at room temperature for 3 days. MSM is an aqueous solution containing the following components.

Components in MSM (numbers in parentheses are content, unit: g/L): (NH₄)₂SO₄ (10), KH₂PO₄ (2), K₂HPO₄ (16), MgSO₄·7H₂O (0.2), NaCl (0.1), CaCl₂ (0.02), FeSO₄ (0.01), Na₂MoO₄·2H₂O (0.0005), NaWO₄·2H₂O (0.0005), and MnSO₄ (0.0005)

The taken-out sheet was washed with water and thereafter compressed on an agate mortar. The biodegradability was evaluated in accordance with the following criteria.
o: The sheet was plastically deformed and broken by compression (biodegradation is progressing).
Δ: No plastic deformation was observed but the sheet was broken when the sheet was compressed strongly.
×: No plastic deformation or break of the sheet by compression occurred (it is presumed that biodegradation does not progress).

### • Tensile test

A tensile test according to JIS K6251 was performed at a tensile speed of 200 mm/min. Tensile strength (strength at break), elongation at break, and 300% tensile stress were measured to evaluate mechanical properties. The elastic modulus was calculated by dividing 10% tensile stress by elongation. The test was performed at the sample number of 2 and the average value was adopted. However, in order to evaluate the variation, the measured values for 300% tensile stress are listed in Table 1 as they are.

### • Evaluation of self-adhesion

After each of the sheets of the same sample was pressure-bonded together with each other, the bonded sheets were peeled off by hand. Based on the tackiness at this peeling, the self-adhesion was evaluated in accordance with the following criteria.
∘: Resistance at the time of peeling existed and tackiness was detected.
×: Resistance at the time of peeling did not exist and tackiness could not be detected.

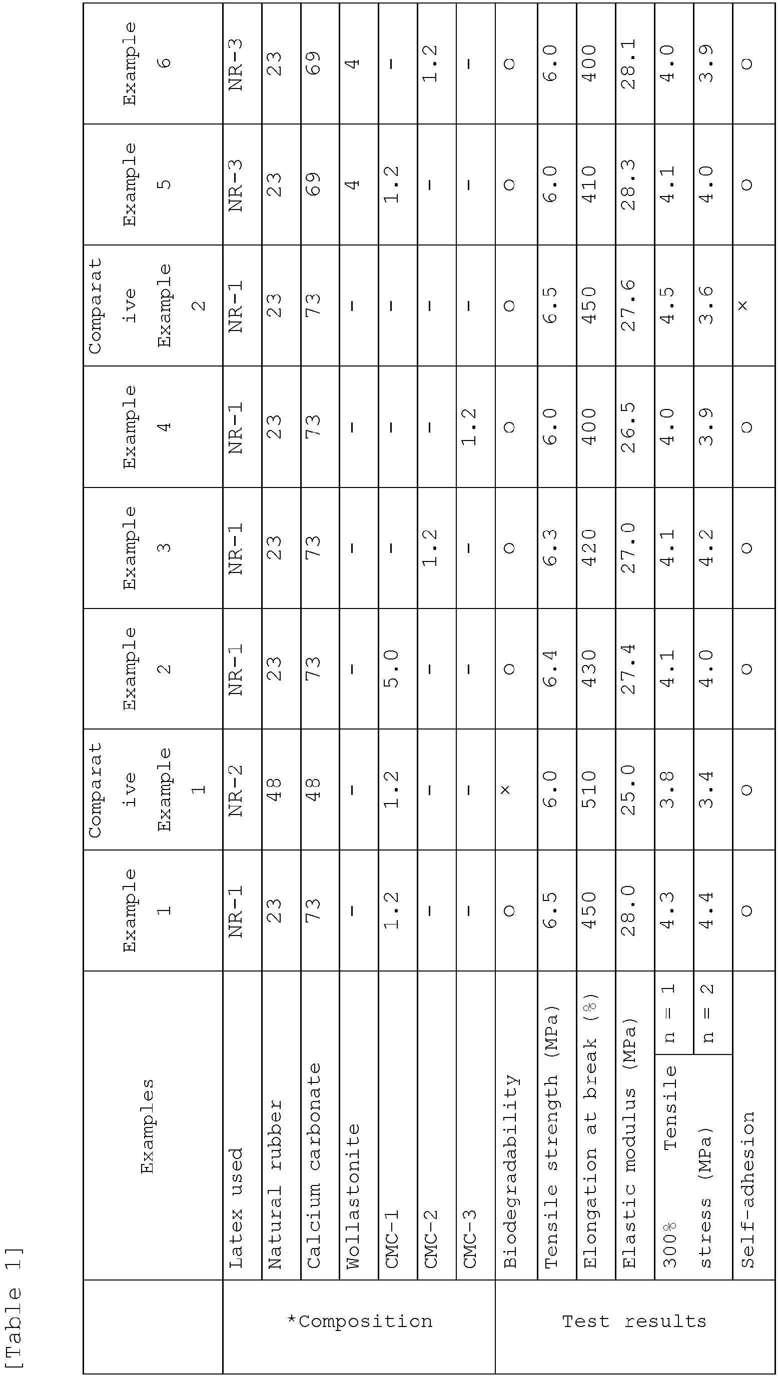

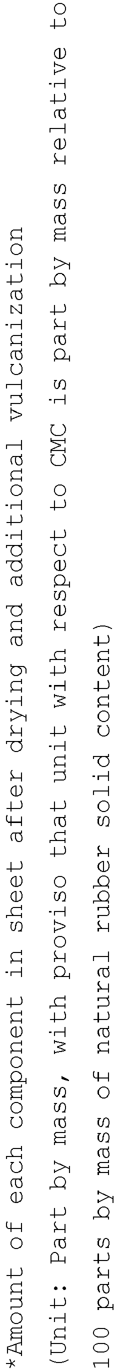

As described above, in each Example in which the contents of the natural rubber and the inorganic substance powder were in a mass ratio of 45:55 to 10:90, the plastic deformation of the sheet was observed after the biodegradability test. Consequently, these compositions exhibited biodegradability. On the other hand, in Comparative Example 1 having a mass ratio of the natural rubber and the inorganic substance powder of 50:50, the sheet did not exhibit plastic deformation even after the biodegradability test and it was presumed that the sheet was not biodegraded. On the other hand, Comparative Example 2 in which modified cellulose (CMC) was not used had insufficient self-adhesion and extremely large variation in the mechanical properties. The uneven distribution of the inorganic substance powder is considered to be the cause of the variation in the mechanical properties.

### [Examples 7 to 12 and Comparative Example 3 to 6]

The tests were conducted for each of the sheets obtained by using NR-1 as the natural rubber latex and varying the blending amount of the modified cellulose (CMC) in the range of 0.3% by mass to 13% by mass relative to 100 parts by mass of the natural rubber solid content. The results are listed in Table 2.

**[Table 2]**

| Test results | | Comparative Example 3 | Example 7 | Example 8 | Example 9 | Example 10 | Comparative Example 4 |
|---|---|---|---|---|---|---|---|
| CMC-2* | | 0.3 | 0.5 | 1.0 | 5.0 | 10.0 | 13.0 |
| Self-adhesion | | × | ○ | ○ | ○ | ○ | ○ |
| Tensile strength (MPa) | | 6.3 | 6.3 | 6.3 | 6.3 | 6.2 | 5.8 |
| 300% Tensile stress (MPa) | n = 1 | 4.1 | 4.1 | 4.1 | 4.2 | 4.2 | 4.2 |
| | n = 2 | 4.1 | 4.2 | 4.2 | 4.1 | 4.0 | 3.8 |

| Test results | | Comparative Example 5 | Example 11 | Example 12 | Example 13 | Example 14 | Comparative Example 6 |
|---|---|---|---|---|---|---|---|
| CMC-3* | | 0.3 | 0.5 | 1.0 | 5.0 | 10.0 | 13.0 |
| Self-adhesion | | × | ○ | ○ | ○ | ○ | ○ |
| Tensile strength (MPa) | | 6.0 | 6.0 | 6.0 | 6.0 | 5.9 | 5.5 |
| 300% Tensile stress (MPa) | n = 1 | 4.0 | 4.0 | 4.0 | 4.1 | 4.1 | 4.1 |
| | n = 2 | 3.8 | 3.9 | 3.9 | 3.8 | 3.8 | 3.5 |

| | | | | | | | |
|---|---|---|---|---|---|---|---|
| * Unite: Part by mass relative to 100 parts by mass of natural rubber solid content | | | | | | | |

It was exhibited that all the properties became excellent by blending 0.5 part by mass to 10.0 parts by mass of the modified cellulose (CMC) relative to 100 parts by mass of natural rubber solid content.

As exhibited in the above results, the sheet obtained from the biodegradable rubber composition according to the present invention in which the natural rubber and the inorganic substance powder were included in a mass ratio of 45:55 to 10:90 and the modified cellulose (CMC) is included in 0.5 part by mass to 10.0 part by mass relative to 100 parts by mass of the natural rubber exhibited excellent biodegradability, had excellent well-balanced mechanical properties, self-adhesion, and the like, and reduced property variation. Such properties were not observed in the sheets obtained from the rubber compositions that did not satisfy the requirements of the present invention.

## Claims

1. A biodegradable rubber composition comprising natural rubber and an inorganic substance powder in a mass ratio of 45:55 to 10:90, and modified cellulose in an amount of 0.5 part by mass to 10.0 parts by mass relative to 100 parts by mass of the natural rubber.

2. The biodegradable rubber composition according to claim 1, wherein the modified cellulose is carboxymethyl cellulose.

3. The biodegradable rubber composition according to claim 1 or 2, wherein the inorganic substance powder comprises calcium carbonate.

4. The biodegradable rubber composition according to claim 3, wherein the calcium carbonate is heavy calcium carbonate.

5. The biodegradable rubber composition according to any one of claims 1 to 4, wherein an average particle diameter of the inorganic substance powder in accordance with an air permeation method is 0.5 µm or more and 13.5 µm or less.

6. A method for producing a biodegradable rubber composition, the method comprising:
mixing an inorganic substance-containing natural rubber latex comprising natural rubber and an inorganic substance powder in a mass ratio of 45:55 to 10:90 in a dried mass, and 0.5 parts by mass to 10.0 parts by mass of modified cellulose or an aqueous solution of the modified cellulose relative to 100 parts by mass of the natural rubber in the inorganic substance-containing natural rubber latex; and
drying, wherein
the mixing and the drying are continuously performed.

7. A biodegradable rubber molded product made of the biodegradable rubber composition according to any one of claims 1 to 5.

8. The biodegradable rubber molded product according to claim 7, wherein the biodegradable rubber molded product is a packaging sheet.

9. The biodegradable rubber molded product according to claim 8, wherein the packaging sheet is a foamed sheet.
